# EUROPÄISCHE PATENTSCHRIFT

(11) **EP 1 180 584 B1**
(45) Veröffentlichungstag und Bekanntmachung des Hinweises auf die Patenterteilung: **26.11.2003**
(21) Anmeldenummer: 01116906.7
(22) Anmeldetag: 11.07.2001
(51) Int. Cl.: F01N 3/20, F01N 3/025, F02D 41/40

(54) **Verfahren und Vorrichtung zur Verringerung von Warmlaufemissionen einer direkteinspritzenden Brennkraftmaschine**
Method and device for reduction of emissions during warming up of a direct injection internal combustion engine
Procédé et dispositif permettant de réduire les émissions pendant la période de chauffage d'un moteur à injection directe

(30) Priorität: 09.08.2000 DE 10038744
(43) Veröffentlichungstag der Anmeldung: 20.02.2002
(73) Patentinhaber: Dr.Ing. h.c.F. Porsche Aktiengesellschaft, 70435 Stuttgart (DE); AUDI AG, 85045 Ingolstadt (DE); Bayerische Motoren Werke Aktiengesellschaft, 80809 München (DE); Volkswagen Aktiengesellschaft, 38436 Wolfsburg (DE)
(72) Erfinder: Huynh, Ngoc-Hoa, 71229 Leonberg (DE); Salzer, Lorenz, 71277 Rutesheim (DE); Gerl, Peter, 73732 Esslingen (DE); Degen, Alf, 38536 Meinersen (DE)

(56) Entgegenhaltungen:
- EP-A- 0 422 432
- WO-A-93/07365
- DE-A- 19 534 903
- US-A- 3 751 914
- US-A- 5 425 233
- US-A- 5 479 775
- US-A- 5 826 425
- US-A- 5 956 942

## Beschreibung

### Stand der Technik

Die vorliegende Erfindung betrifft ein Verfahren und eine Vorrichtung zur Verringerung von Warmlaufemissionen einer direkteinspritzenden Brennkraftmaschine.

Die Schadstoffemission von Ottomotoren kann durch eine katalytische Nachbehandlung wirksam vermindert werden. Dabei geht es im wesentlichen darum, den noch nicht vollständig verbrannten Kraftstoff vollständig zu verbrennen. Ein Katalysator fördert die Nachverbrennung von reaktiven CO und HC zu ungefährlichem Kohlendioxid (CO₂) und Wasser (H₂O) und reduziert gleichzeitig im Abgas vorkommende Stickoxide (NOₓ) zu neutralem Stickstoff (N₂).

Üblich ist beispielsweise der Dreiwege-Katalysator, der alle drei Schadstoffe CO, HC und NOₓ gleichzeitig abbaut. Er hat ein Röhrengerüst aus einer Keramik, die mit Edelmetallen, vorzugsweise mit Platin und Rhodium beschichtet ist, wobei letztere den chemischen Abbau der Schadstoffe beschleunigen.

Das katalytische Dreiwege-Verfahren setzt voraus, daß das Gemisch stöchiometrisch zusammengesetzt ist. Eine stöchiometrische Gemischzusammensetzung ist durch eine Luftzahl λ = 1,00 charakterisiert. Bei dieser Gemischzusammensetzung arbeitet der Katalysator mit einem sehr hohen Wirkungsgrad. Schon eine Abweichung von nur einem Prozent beeinträchtigt die Wirksamkeit der Schadstoffumsetzung erheblich.

Die bekannte λ-Sonde liefert zur Verwendung bei der Gemischregelung ein Signal über die augenblickliche Gemischzusammensetzung an das Steuergerät. Die λ-Sonde ist im Abgasrohr des Motors an einer Stelle eingebaut, an der über den gesamten Betriebsbereich des Motors die für die Funktion des Systems nötige Abgashomogenität vorhanden ist.

Um das Verbrauchspotential besonders eines direkt einspritzenden Ottomotors vollständig zu nutzen, ist es erforderlich, den Motor mit Luftüberschuß, also mager (λ > 1), zu betreiben. In dieser mageren Betriebsart sind die bekannten Dreiwege-Katalysatoren jedoch nutzlos, da sie die Stickoxide (NOₓ) nicht mehr umwandeln können.

Als alternative Möglichkeit, NOₓ aus dem mageren Abgas zu entfernen, stellt der an sich bekannte NOₓ-Speicherkatalysator eine aussichtsreiche Alternative dar. Im Neuzustand eines solchen NOₓ-Speicherkatalysators können heute bekannte bzw. geltende Abgasgrenzwerte eingehalten werden. Allerdings erfordern NOₓ-Speicherkatalysatoren eine regelmäßige Entgiftung (Desulfatisierung), um ihre Leistungsfähigkeit zu erhalten.

Für den Betrieb eines solchen NO_{X}-Speicherkatalysators stellen bekannte Vor- bzw. Startkatalysatoren (VK), wie sie zur Erfüllung strenger Abgasgrenzwerte in der Warmlaufphase erforderlich sind, eine ernsthafte Beeinträchtigung dar. Durch ihr systembedingtes Sauerstoff-Speichervermögen behindern sie die Regenerationsphasen des NO_{X}-Speicherkatalysators und verursachen bei den ebenfalls erforderlichen Desulfatisierungsverfahren durch hohen Bauaufwand hohe zusätzliche Kosten.

Aus der EP 0 607 242 B1 ist ein Abgassystem bekannt, wobei ein katalytischer Wandler zwei oder mehrere Matrizen innerhalb eines Gehäuses aufweist, welche jeweils Durchgänge für die Abgase definieren, wobei ferner zwischen den beiden Monolithen eine Kammer vorgesehen ist, die eine Zündvorrichtung enthält. Diese als Nachbrennkammer wirkende Vorrichtung dient dazu, den zweiten Monolithen anstelle des ersten aufzuheizen.

Alternativ dazu sind elektrisch beheizbare Katalysatoren bekannt, die den Entfall der Vorkatalysatoren ermöglichen. Durch die hohe erforderliche elektrische Leistung und bauartbedingt verursachen diese elektrisch beheizten Katalysatoren ebenfalls hohe mittelbare und unmittelbare Kosten.

Eine Aufgabe der vorliegenden Erfindung liegt darin, ein Verfahren und eine Vorrichtung zur Verringerung von Warmlaufemissionen einer direkteinspritzenden Brennkraftmaschine anzugeben, wodurch die Starttemperatur einer Katalysatoreinrichtung schnell und effektiv erreichbar sind.

### Vorteile der Erfindung

Das erfindungsgemäße Verfahren zur Verringerung von Warmlaufemissionen mit den Merkmalen des Anspruchs 1 und die entsprechende Vorrichtung gemäß Anspruch 6 weisen den Vorteil auf, daß bei gleicher Wirksamkeit wie bei bekannten Systemen sowohl auf den Vorkatalysator als auch auf die Sekundärluftpumpe verzichtet werden kann. Weiterhin nimmt die Heizvorrichtung nur einen Bruchteil elektrischen Energie der elektrisch beheizten Katalysatoren auf.

Die vorliegende Erfindung macht sich die auf direkteinspritzende Motoren beschränkte Möglichkeit zunutze, dem verbrannten Abgas während der Ausschiebephase bzw. Ausstoßphase, also bei offenem Auslaßventil, erneut Kraftstoff zuzugeben, was auch als Späteinspritzung bezeichnet wird. Ein weiterer Vorteil einer solchen Direkteinspritzung besteht darin, daß die Zusammensetzung des Luft-Kraftstoff-Gemischs, also der λ-Wert, zur Erzeugung der Motorleistung innnerhalb systemabhängiger Grenzen frei wählbar ist. Es wird dabei unterschieden zwischen dem λ-Wert im Motor (λ_{M}), worunter die Gemischzusammensetzung bei der zur Motorleistungserzeugung stattfindenden Verbrennung zu verstehen ist, und dem λ-Wert des Katalysators (λ_{K}), worunter die im Katalysator wirksame Gemischzusammensetzung zu verstehen ist.

Die Erfindung schlägt vor, unmittelbar nach dem Kaltstart das λ_{M} derart mager zu wählen, dass nach der motorischen Verbrennung eine nennenswerte O₂-Konzentration im Abgas erhalten bleibt, d.h. λ_{M} ist sehr viel größer 1. Durch Späteinspritzung nach Öffnen des Auslassventils wird dem Abgas eine der O₂-Konzentration entsprechende Menge Kraftstoff beigefügt, so dass im Katalysator eine im wesentlichen stöchiometrische Abgaszusammensetzung (λ_{K} = 1)vorliegt, so dass das Abgas zu diesem Zeitpunkt neben dem Sauerstoff eine entsprechende Menge Kraftstoff mit sich führt.

Die Heizvorrichtung ist auf derart hohe Temperaturen vorgeheizt, dass sie geeignet ist, das im Abgas zugeführte stöchiometrische Luft-/ Kraftstoffgemisch erneut in umittelbarer Nähe der Katalysatoreinrichtung zu zünden.

In den Unteransprüchen finden sich vorteilhafte Weiterbildungen und Verbesserungen der Erfindung.

Gemäß einer bevorzugten Weiterbildung weist die Katalysatoreinrichtung einen ersten motornahen Katalysator und einen zweiten motorfernen Katalysator auf, die hintereinander angeordnet sind. Das Zünden erfolgt zwischen den beiden Katalysatoren. Durch die Anordnung der Zündvorrichtung hinter dem ersten Monoliten ist die Heizvorrichtung vor übermäßigen Druck- und Temperaturschwankungen geschützt, und die Nutzung des zweiten Monoliten als Startkatalysator trägt dessen ohnehin geringer thermischer Belastung Rechnung. Das Heizelement dient dazu, das vom Motor angelieferte brennbare Luft-/Kraftstoffgemisch in unmittelbarer Nähe des zweiten Monoliten zu zünden, so dass es zur Beheizung des selben dient und diesen bei entsprechender Abstimmung in kurzer Zeit auf eine Anspringtemperatur von etwa 250 °C erwärmt.

Gemäß einer weiteren bevorzugten Weiterbildung ist der erste Katalysator ein NOₓ₋Speicherkatalysator.

Gemäß einer weiteren bevorzugten Weiterbildung ist der zweite Katalysator ein NOₓ₋Speicherkatalysator oder ein 3-Wege-Katalysator.

Gemäß einer weiteren bevorzugten Weiterbildung wird das Zünden durch eine im Abgasstrom angeordnete Zündvorrichtung durchgeführt, die zweckmäßigerweise einen Rahmen, welcher mit einem katalytisch beschichteten Heizdraht bewickelt ist und in einen Abgasstrang der Abgasanlage quer zur Strömungsachse des Abgases einbaubar ist, und eine Stromversorgungseinrichtung zum Versorgen des Heizdrahtes mit elektrischem Strom zum Erzeugen einer vorbestimmten Heizdrahttemperatur aufweist. Sie kann beispielsweise aus gitterförmig angeordnetem Widerstandsdraht bestehen, der mit Platin als Katalysatormaterial beschichtet ist. Durch die aus der niedrigen Masse resultierende geringere Wärmekapazität ist die zur Beheizung erforderliche elektrische Leistung selbst bei hoher Temperatur des Heizelementes viel geringer als es zur Beheizung eines gesamten Monoliten notwendig wäre.

### Zeichnungen

Ausführungsbeispiele der Erfindung sind in den Zeichnungen dargestellt und in der nachfolgenden Beschreibung näher erläutert.

Es zeigen:
- Fig. 1: eine schematische Darstellung eines Abgassystems einer Brennkraftmaschine mit einer Direkteinspritzung als Ausführungsbeispiel der vorliegenden Erfindung; und
- Fig. 2: eine Darstellung der Temperaturerhöhung bei einer Variation des λ-Wertes beim ersten Ausführungsbeispiel zur Illustration des erfindungsgemäßen Verfahrens.

### Beschreibung der Ausführungsbeispiele

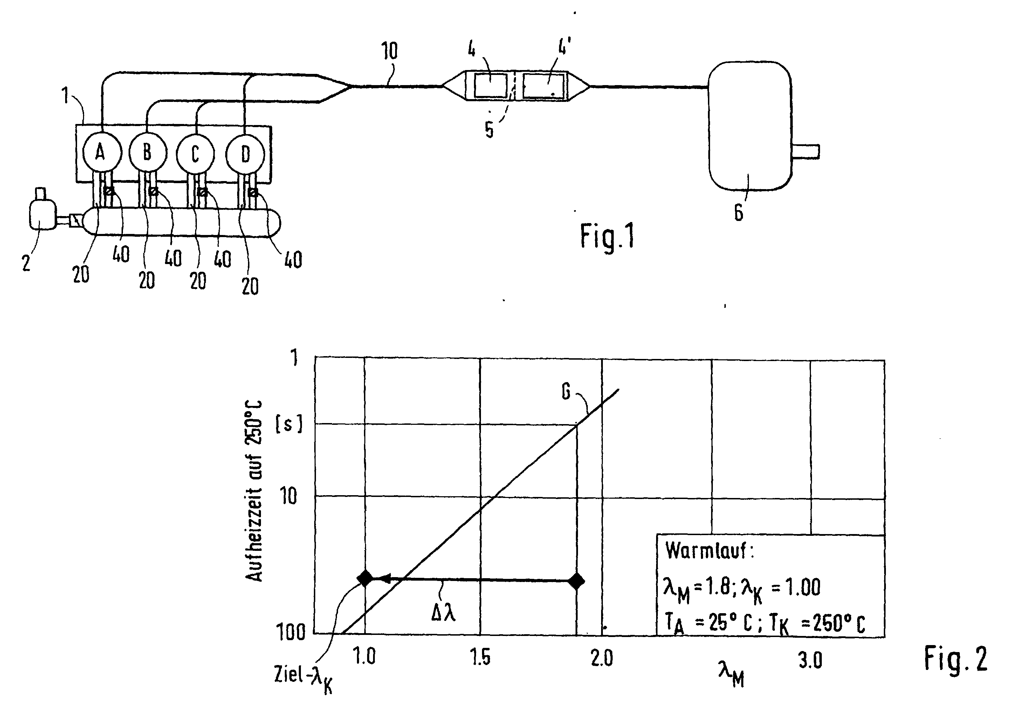

Fig. 1 zeigt eine schematische Darstellung eines Abgassystems einer Brennkraftmaschine mit einer Direkteinspritzung als Ausführungsbeispiel der vorliegenden Erfindung.

In Fig. 1 bezeichnen 1 eine Brennkraftmaschine mit vier Zylindern A bis D, 2 einen Luftfilter, 20 Ansaugleitungen und 40 Drallklappen zur Turbulenzerzeugung für die jeweiligen Zylinder A bis D, 10 eine Abgasleitung, 4 einen NOₓ-Speicherkatalysator und 4' einen nachgeschalteten Dreiwege-Katalysator sowie 6 einen Nachschalldämpfer.

Im der Warmlaufphase erfolgt durch geeignete Steuerung der Direkteinspritzung eine zusätzliche Späteinspritzung von Kraftstoff in das Abgas während des Aussschiebetaktes.

Genauer gesagt erfolgt ein Einstellen eines mageren Luft-/ Kraftstoffgemischs auf beispielsweise λ_{M} = 1.8 für die motorische Verbrennung. In das Abgas wird eine Späteinspritzung während des Aussschiebetaktes der Brennkraftmaschine durchgeführt, so daß das Abgas ein im wesentlichen stöchiometrisches Luft-/ Kraftstoffgemisch λ_{K} = 1.00 enthält. Dann erfolgt ein Zünden des im Abgas enthaltenen stöchiometrischen Luft-/ Kraftstoffgemischs zwischen den beiden Katalysatoren 4, 4' durch eine geeignete Heizeinrichtung 5.

Fig. 1a zeigt eine Darstellung der Temperaturerhöhung bei einer Variation des λ-Wertes bei der Ausführungsform zur Illustration des erfindungsgemäßen Verfahrens.

Auf der x-Achse ist der λ_{M}-Wert aufgetragen und auf der y-Achse die zugehörige Aufheizzeit auf 250 °C. Die Gerade G zeigt beispielhaft einen Betriebspunkt mit einer Drehzahl von 2000 UpM und einer spezifischen Arbeit wₑ von 0,2 kJ/dm³.

Im Warmlaufbetrieb ist λ_{M} = 1.8, wodurch eine Abgas-temperatur T_{A} im Abgaskrümmer von 25 °C erreicht wird. Das Ziel-λ_{K} für die Warmlaufphose liegt bei 1.00 und die Ziel-Katalysatortemperatur T_{K} bei 250 °C.

Diese Zielwerte werden erreicht durch λ_{M} = 1,8 sowie eine durch eine Späteinspritzung bewirkte λ_{K}-Änderung Δλ, wodurch eine Katalysator-Temperaturerhöhung auf 250 °C bewirkt wird.

Die Zündvorrichtung umfaßt zweckmäßigerweise einen Rahmen, welcher mit einem katalytisch beschichteten Heizdraht bewickelt ist und in einen Abgasstrang der Abgasanlage quer zur Strömungsachse des Abgases einbaubar ist, sowie eine Stromversorgungseinrichtung zum Versorgen des Heizdrahtes mit elektrischem Strom zum Erzeugen einer vorbestimmten Heizdrahttemperatur.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Selbstverständlich ist die Erfindung nicht auf eine Vierzylinder-Brennkraftmaschine beschränkt, sondern auf jegliche Anzahl von Zylindern anwendbar.

Auch kann der nachgeschaltete Katalysator ein NOₓ-Speicherkatalysator sein.

## Patentansprüche

1. Verfahren zur Verringerung von Warmlaufemissionen im Abgassystem einer Brennkraftmaschine (1) mit einer Direkteinspritzung mit den Schritten:
Einstellen eines mageren Luft-/Kraftstoffgemischs für die motorische Verbrennung;
Durchführen einer Späteinspritzung in das Abgas während des Aussschiebetaktes der Brennkraftmaschine, so daß das Abgas ein im wesentlichen stöchiometrisches Luft-/Kraftstoffgemisch enthält; und
Zünden des im Abgas enthaltenen stöchiometrischen Luft-/Kraftstoffgemischs in der Nähe einer Katalysatoreinrichtung (4, 4') zum Erwärmen der Katalysatoreinrichtung.

2. Verfahren nach Anspruch 1, **dadurch gekennzeichnet, daß** die Katalysatoreinrichtung (4, 4') einen ersten motornahen Katalysator (4) und einen zweiten motorfernen Katalysator (4') aufweist, die hintereinander angeordnet sind, und daß das Zünden zwischen den beiden Katalysatoren (4, 4') erfolgt.

3. Verfahren nach Anspruch 2, **dadurch gekennzeichnet, daß** der erste Katalysator (4) ein NOₓ-Speicherkatalysator ist.

4. Verfahren nach Anspruch 2 oder 3, **dadurch gekennzeichnet, daß** der zweite Katalysator (4') ein NOₓ-Speicherkatalysator oder ein 3-Wege-Katalysator ist.

5. Verfahren nach einem der vorhergehenden Ansprüche, **dadurch gekennzeichnet, daß** das Zünden durch eine im Abgasstrom angeordnete Zündvorrichtung (5) durchgeführt wird.

6. Vorrichtung zur Verringerung von Warmlaufemissionen im Abgassystem einer Brennkraftmaschine (1) mit einer Direkteinspritzung mit:
einer Einstelleinrichtung zum Einstellen eines mageren Luft-/Kraftstoffgemischs für die motorische Verbrennung;
einer Einspritzeinrichtung zum Durchführen einer Späteinspritzung in das Abgas während des Aussschiebetaktes der Brennkraftmaschine, so daß das Abgas ein im wesentlichen stöchiometrisches Luft-/Kraftstoffgemisch enthält; und
einer Zündeinrichtung (5) zum Zünden des im Abgas enthaltenen stöchiometrischen Luft-/Kraftstoffgemischs in der Nähe einer Katalysatoreinrichtung (4, 4') zum Erwärmen der Katalysatoreinrichtung.

7. Vorrichtung nach Anspruch 6, **dadurch gekennzeichnet, daß** die Zündvorrichtung (5) aufweist:
einen Rahmen, welcher mit einem Heizdraht bewickelt ist und in einen Abgasstrang der Abgasanlage quer zur Strömungsachse des Abgases einbaubar ist; und
eine Stromversorgungseinrichtung zum Versorgen des Heizdrahtes mit elektrischem Strom zum Erzeugen einer vorbestimmten Heizdrahttemperatur;
wobei der Rahmen einen Strömungsbereich definiert, in dem ein Heizdrahtgitter vorgesehen ist.

8. Vorrichtung nach Anspruch 7, **dadurch gekennzeichnet, daß** der Heizdraht (3) katalytisch beschichtet ist.

## Claims

1. A method of reducing warm-up emissions in the exhaust system of an intemal-combustion engine (1) with direct injection with the steps:
setting a leaner air / fuel mixture for the engine combustion;
performing a delayed injection into the exhaust gas during the exhaust stroke of the internal-combustion engine, so that the exhaust gas contains a substantially stoichiometric air / fuel mixture, and
igniting the stoichiometric air / fuel mixture contained in the exhaust gas in the vicinity of a catalyst device (4, 4') in order to heat the catalyst device.

2. A method according to Claim 1, **characterized in that** the catalyst device (4, 4') comprises a first catalyst (4) close to the engine and a second catalyst (4') remote from the engine, which catalysts are arranged one behind the other, and the ignition takes place between the two catalysts (4, 4').

3. A method according to Claim 2, **characterized in that** the first catalyst (4) is an NOₓ storage catalyst.

4. A method according to Claim 2 or 3, **characterized in that** the second catalyst (4') is an NOₓ storage catalyst or a 3-way catalyst.

5. A method according to one of the preceding Claims, **characterized in that** the ignition is performed by an ignition device (5) arranged in the exhaust-gas flow.

6. A device for reducing warm-up emissions in the exhaust system of an internal-combustion engine (1) with direct injection with:
a setting device for setting a leaner air / fuel mixture for the engine combustion;
an injection device for performing a delayed injection into the exhaust gas during the exhaust stroke of the internal-combustion engine, so that the exhaust gas contains a substantially stoichiometric air / fuel mixture, and
an ignition device (5) for igniting the stoichiometric air / fuel mixture contained in the exhaust gas in the vicinity of a catalyst device (4, 4') in order to heat the catalyst device.

7. A device according to Claim 6, **characterized in that** the ignition device (5) comprises:
a frame around which a heating wire is wound and which can be inserted into an exhaust-gas line of the exhaust system transversely to the axis of the flow of the exhaust gas, and
a current-supply device for supplying the heating wire with electrical current in order to produce a pre-determined temperature of the heating wire,
wherein the frame defines a flow region in which a heating-wire grating is provided.

8. A device according to Claim 7, **characterized in that** the heating wire (3) is coated in a catalytic manner.

## Revendications

1. Procédé pour réduire les émissions à chaud du système de gaz d'échappement d'un moteur à combustion interne (1) à injection directe, comportant les étapes suivantes :
réglage d'un mélange maigre d'air et de carburant pour la combustion du moteur ;
exécution d'une injection retardée dans les gaz d'échappement pendant la phase d'échappement du moteur à combustion interne, ce qui fait que les gaz d'échappement contiennent un mélange sensiblement stoechiométrique d'air et de carburant ; et
allumage du mélange stoechiométrique d'air et de carburant contenu dans les gaz d'échappement à proximité d'un dispositif à catalyseurs (4, 4') pour chauffer le dispositif à catalyseurs

2. Procédé selon la revendication 1, **caractérisé en ce que** le dispositif à catalyseurs (4, 4') comporte un premier catalyseur (4) proche du moteur et un deuxième catalyseur (4') éloigné du moteur qui sont disposés l'un derrière l'autre, et **en ce que** l'allumage s'effectue entre les deux catalyseurs (4, 4').

3. Procédé selon la revendication 2, **caractérisé en ce que** le premier catalyseur (4) est un catalyseur à accumulation de NOₓ.

4. Procédé selon la revendication 2 ou 3, **caractérisé en ce que** le deuxième catalyseur (4') est un catalyseur à accumulation de NOₓ ou un catalyseur à 3 voies.

5. Procédé selon l'une des revendications précédentes, **caractérisé en ce que** l'allumage est exécuté par un dispositif d'allumage (5) disposé dans le courant des gaz d'échappement.

6. Dispositif pour réduire les émissions à chaud dans le système des gaz d'échappement d'un moteur à combustion interne (1) à injection directe, comportant :
un dispositif de réglage pour régler un mélange maigre d'air et de carburant pour la combustion du moteur ;
un dispositif d'injection pour exécuter une injection retardée dans les gaz d'échappement pendant la phase d'échappement du moteur à combustion interne, ce qui fait que les gaz d'échappement contiennent un mélange sensiblement stoechiométrique d'air et de carburant ;
un dispositif d'allumage (5) pour allumer le mélange stoechiométrique d'air et de carburant contenu dans les gaz d'échappement à proximité d'un dispositif à catalyseurs (4, 4') pour chauffer le dispositif à catalyseurs.

7. Dispositif selon la revendication 6, **caractérisé en ce que** le disposition d'allumage (5) comporte :
un cadre qui est entouré d'un fil chauffant et qui peut être monté dans une ligne des gaz d'échappement du système des gaz d'échappement, transversalement à l'axe d'écoulement des gaz d'échappement ; et
un dispositif d'alimentation en courant pour alimenter le fil chauffant en courant électrique afin de produire une température prédéterminée du fil chauffant ;
le cadre définissant une zone d'écoulement dans laquelle est prévue une grille en fil chauffant.

8. Dispositif selon la revendication 7, **caractérisé en ce que** le fil chauffant (3) présente un revêtement catalytique.
